# EUROPÄISCHE PATENTSCHRIFT

(11) **EP 3 097 978 B1**
(45) Veröffentlichungstag und Bekanntmachung des Hinweises auf die Patenterteilung: **28.03.2018**
(21) Anmeldenummer: 15169347.0
(22) Anmeldetag: 27.05.2015
(51) Int. Cl.: B01L 3/00, G01F 23/30, G01F 23/26, G01N 35/10

(54) **FLÜSSIGKEITSBEHÄLTER MIT EINER SCHWAPPSCHUTZVORRICHTUNG**
CONTAINER FOR LIQUID WITH A SPLASH PREVENTION DEVICE
RÉCIPIENT DE LIQUIDE DOTÉ D'UN DISPOSITIF ANTICLAPOTIS

(43) Veröffentlichungstag der Anmeldung: 30.11.2016
(73) Patentinhaber: Siemens Healthcare Diagnostics Products GmbH, 35041 Marburg (DE)
(72) Erfinder: Kalbfell, Heiko, 65232 Taunusstein (DE); Wiedekind-Klein, Alexander, 56812 Cochem (DE)

(56) Entgegenhaltungen:
- EP-A1- 1 998 180
- EP-A1- 2 400 275
- WO-A2-99/57561
- DE-A1-102006 021 404
- DE-C1- 3 838 278
- JP-A- 2005 083 777
- US-A- 5 102 631

## Beschreibung

Die vorliegende Erfindung liegt auf dem Gebiet der automatischen Analysegeräte und betrifft einen Flüssigkeitsbehälter mit einer Schwappschutzvorrichtung. Heutige Analysegeräte, wie sie routinemäßig in der Analytik, der Forensik, der Mikrobiologie und der klinischen Diagnostik Verwendung finden, sind in der Lage, eine Vielzahl von Nachweisreaktionen und Analysen mit einer Vielzahl von Proben durchzuführen. Um eine Vielzahl von Untersuchungen automatisiert durchführen zu können, sind diverse automatisch arbeitende Vorrichtungen zum räumlichen Transfer von Messzellen, Reaktionsbehältern und Reagenzflüssigkeitsbehältern, wie z.B. Transferarme mit Greiffunktion, Transportbänder oder drehbare Transporträder, sowie Vorrichtungen zum Transfer von Flüssigkeiten, wie z.B. Pipettiervorrichtungen in einem Gerätegehäuse untergebracht. Die Geräte umfassen eine zentrale Steuereinheit, die mittels entsprechender Software dazu in der Lage ist, die Arbeitsschritte für die gewünschten Analysen weitgehend selbstständig zu planen und abzuarbeiten. Flüssigkeitsbehälter mit einer Schwappschutzvorrichtung sind beispielweise in US-5102631, DE-3838278, DE-102006021404, JP-2005083777 und EP-1998180 beschrieben. Viele der in derartigen automatisiert arbeitenden Analysegeräten verwendeten Analyseverfahren beruhen auf optischen Methoden. Besonders verbreitet sind Messsysteme, die auf photometrischen (z.B. turbidimetrischen, nephelometrischen, fluorometrischen oder luminometrischen) oder radiometrischen Messprinzipien beruhen. Diese Verfahren ermöglichen den qualitativen und quantitativen Nachweis von Analyten in flüssigen Proben, ohne zusätzliche Trennschritte vorsehen zu müssen. Die Bestimmung klinisch relevanter Parameter, wie zum Beispiel der Konzentration oder der Aktivität eines Analyten erfolgt vielfach, indem ein Aliquot einer Körperflüssigkeit eines Patienten gleichzeitig oder nacheinander mit einem oder mehreren Testreagenzien in einem Reaktionsgefäß vermischt wird, wodurch eine biochemische Reaktion in Gang gesetzt wird, die eine messbare Veränderung einer optischen Eigenschaft des Testansatzes bewirkt.

Das Messergebnis wird von dem Messsystem wiederum in eine Speichereinheit weitergeleitet und ausgewertet. Anschließend liefert das Analysegerät einem Benutzer über ein Ausgabemedium, wie z.B. einen Monitor, einen Drucker oder eine Netzwerkverbindung probenspezifische Messwerte.

Für den Betrieb verschiedener Funktionseinheiten eines Analysegerätes ist die Handhabung relativ großer Flüssigkeitsmengen erforderlich. Pipettiernadeln müssen beispielsweise nach jedem Kontakt mit einer Reagenz- oder Probenflüssigkeit gereinigt werden. Dazu sind in dem Analysegerät häufig Waschbrunnen vorgesehen, die kontinuierlich mit frischer Waschlösung versorgt werden. Damit das Analysegerät über einen möglichst langen Zeitraum unbeaufsichtigt betrieben werden kann, wird die Waschlösung je nach Auslegung des Analysegeräts in 0,2 bis 2 Liter fassenden Behältern vorrätig gehalten. Der Flüssigkeitsabfall wird in Behältern gesammelt, die zwischen 5 und 20 Liter fassen. Wasser ist eine weitere Flüssigkeit, die in einem Analysegerät häufig in größeren Mengen benötigt wird, beispielsweise zu Reinigungszwecken oder als Lösungsmittel für lyophilisierte Reagenzien oder auch als Hydraulikflüssigkeit, und wird daher ebenfalls in relativ großvolumigen Behältern im Analysegerät gelagert.

Um frühzeitig erkennen zu können, ob ein Flüssigkeitsvorrat in einem Behälter zur Neige geht oder ob der maximale Füllstand in einem Abfallbehälter erreicht wird, sind an den Flüssigkeitsbehältern üblicherweise Füllstandsensoren angebracht. Besonders bevorzugt sind kapazitive Füllstandsensoren, die an der Außenseite des Behälters angebracht sind, weil sie eine nicht-invasive und überdies sehr präzise Messung des Füllstandes einer Flüssigkeit im Behälterinneren ermöglichen. Ein derartiger Füllstandsensor ist beispielsweise in EP-A1-2400275 beschrieben. Der Füllstandsensor umfasst u.a. mehrere Elektroden, die eine Messfläche bilden und demgemäß als Sensorfolie ausgestaltet sein können. Die vertikale Ausdehnung der Messfläche definiert den Bereich in dem verschiedene Füllstände gemessen werden können.

Die großvolumigen Behälter für die sogenannten Systemflüssigkeiten, wie beispielsweise Wasser oder Waschlösungen, und auch die Behälter für die Sammlung von Flüssigabfällen werden üblicherweise in einer oder mehreren Kammern im unteren Bereich des Gerätegehäuses untergebracht. Um einem Benutzer des Analysegeräts den Austausch der im gefüllten Zustand verhältnismäßigen schweren Flüssigkeitsbehälter zu erleichtern, sind die Kammern zur Lagerung der Behälter häufig als herausziehbare Schublade ausgelegt. Nach dem Herausziehen der Schublade kann ein Behälter einfach senkrecht nach oben angehoben oder seitlich herausgezogen werden, ohne dass sich der Benutzer tief bücken und in die Kammer greifen muss.

Problematisch ist jedoch, dass beim Herausziehen einer Schublade die Flüssigkeit in den Behältern in Bewegung gerät und die Behälterinnenwand unkontrolliert mit Flüssigkeit benetzt wird. Dies hat zur Folge, dass die kapazitive Messung des Füllstands beeinträchtigt wird, und die Gefahr besteht, dass ein falsch zu hoher Füllstand gemessen wird. Dadurch kann es passieren, dass ein quasi leerer Behälter nicht erkannt wird und der Austausch nicht rechtzeitig erfolgt, was wiederum zu einer Unterbrechung des Betriebs des gesamten Analysegeräts führen würde.

Der vorliegenden Erfindung liegt daher die Aufgabe zugrunde, Mittel bereit zu stellen, die eine zuverlässige kapazitive Füllstandbestimmung in Flüssigkeitsbehältern auch dann sicher stellen, wenn der Flüssigkeitsbehälter bewegt wird.

Die Aufgabe wird erfindungsgemäß dadurch gelöst, dass der Flüssigkeitsbehälter mit einer Schwappschutzvorrichtung ausgestattet wird.

Gegenstand der vorliegenden Erfindung ist demnach ein Flüssigkeitsbehälter mit einer Schwappschutzvorrichtung, wobei die Schwappschutzvorrichtung aus einem im Inneren des Flüssigkeitsbehälters senkrecht zum Boden des Flüssigkeitsbehälters angeordneten Rohr besteht, das dieselbe Grundflächenform aufweist wie der Flüssigkeitsbehälter und wobei am oberen Ende des Rohres mindestens eine Öffnung in der Rohrwand vorgesehen ist und wobei
a. entweder das untere Ende des Rohres den Boden des Flüssigkeitsbehälters nicht berührt
b. oder am unteren Ende des Rohres mindestens eine Öffnung in der Rohrwand vorgesehen ist,
dadurch gekennzeichnet, dass der Außendurchmesser des Rohres (2) 50 % bis 90 % des Innendurchmessers des Flüssigkeitsbehälters (1) beträgt. Das Schwappschutzrohr verhindert, dass bei Bewegung des Flüssigkeitsbehälters die Behälterinnenwand unkontrolliert mit Flüssigkeit benetzt wird, da ein schmaler, flüssigkeitsgefüllter Spalt zwischen Behälterinnenwand und äußerer Rohrwandfläche gebildet wird. Aufgrund der geringen Oberfläche der in dem Spalt befindlichen Flüssigkeit entstehen bei einer Bewegung des Behälters keine nennenswerten dynamischen Bewegungen der Flüssigkeit im Bereich der Behälterinnenwand. Dies bewirkt, dass auch bei Bewegung des Flüssigkeitsbehälters eine zuverlässige kapazitive Füllstandbestimmung gewährleistet ist.

Am unteren Ende des Schwappschutzrohres, also im Bereich des Bodens des Flüssigkeitsbehälters, muss ein Flüssigkeitsaustausch zwischen dem Innenraum des Schwappschutzrohres und dem Spaltraum zwischen Behälterinnenwand und äußerer Rohrwandfläche gewährleistet sein.

Dies kann dadurch erzielt werden, dass das Rohr so im Inneren des Flüssigkeitsbehälters angeordnet ist, dass das untere Ende des Rohres den Boden des Flüssigkeitsbehälters nicht berührt. In diesem Fall könnte das Rohr beispielsweise auf der Innenseite eines Deckel für den Flüssigkeitsbehälter angebracht sein, so dass beim Anbringen des Deckels das Rohr in das Behälterinnere eingeführt wird. Die Länge des Rohrs ist so zu wählen, dass es nicht ganz bis zum Boden des Flüssigkeitsbehälters reicht. Das Rohr könnte jedoch auch an der Decke der Behälterinnenwand oder über einige Verbindungselemente an den seitlichen Innenwänden des Behälters befestigt sein. In diesen Fällen könnten das Rohr und Flüssigkeitsbehälter sogar einstückig ausgebildet sein.

Alternativ kann der Flüssigkeitsaustausch im Bereich des Bodens des Flüssigkeitsbehälters dadurch hergestellt werden, dass am unteren Ende des Schwappschutzrohres mindestens eine Öffnung in der Rohrwand vorgesehen ist. In diesem Fall könnte das Rohr bis auf den Boden des Flüssigkeitsbehälters reichen, oder das Rohr könnte mit dem Boden des Flüssigkeitsbehälters verbunden sein. Auch diesem Fall könnten das Rohr und Flüssigkeitsbehälter einstückig ausgebildet sein.

Die Öffnung in der Rohrwand am unteren Ende des Schwappschutzrohres kann verschiedenste symmetrische oder asymmetrische Formen aufweisen. Die Öffnung kann beispielsweise kreisrund, rechteckig oder rechteckig mit abgerundeten Ecken ausgeformt sein. Vorzugsweise sind am unteren Ende des Schwappschutzrohres mehrere Öffnungen in der Rohrwand vorgesehen. Dies hat den Vorteil, dass der Flüssigkeitsaustausch zwischen dem Innenraum des Schwappschutzrohres und dem Spaltraum zwischen Behälterinnenwand und äußerer Rohrwandfläche besonders effektiv und gleichmäßig erfolgt. Vorzugsweise sind die mehreren Öffnungen am unteren Ende des Rohres in einer einzigen Ebene angeordnet.

Die Öffnung in der Rohrwand am oberen Ende des Schwappschutzrohres dient dem Druckausgleich zwischen dem Innenraum des Rohres und dem das Rohr umgebenden Raum. Damit ist gewährleistet, dass der Füllstand im Inneren Schwappschutzrohres und in dem das Rohr umgebenden Raum immer identisch ist.

Die Öffnung in der Rohrwand am oberen Ende des Schwappschutzrohres kann verschiedenste symmetrische oder asymmetrische Formen aufweisen. Die Öffnung kann beispielsweise kreisrund, rechteckig oder rechteckig mit abgerundeten Ecken ausgeformt sein. Vorzugsweise sind am oberen Ende des Schwappschutzrohres mehrere Öffnungen in der Rohrwand vorgesehen. Vorzugsweise sind die mehreren Öffnungen am oberen Ende des Rohres in einer einzigen Ebene angeordnet.

Vorzugsweise ist die Rohrwand des Schwappschutzrohres in dem Bereich zwischen dem oberen Ende und dem unteren Ende des Rohres geschlossen, d.h. sie weist keinerlei Öffnungen auf.

Wie bereits erwähnt weist das Schwappschutzrohr dieselbe Grundflächenform auf wie der Flüssigkeitsbehälter. Der Flüssigkeitsbehälter und das Rohr können jeweils eine kreisförmige Grundfläche aufweisen. Alternativ können der Flüssigkeitsbehälter und das Rohr jeweils eine mehreckige, vorzugsweise eine rechteckige Grundfläche aufweisen. Der Außendurchmesser des Schwappschutzrohres beträgt 50 % bis 90 % des Innendurchmessers des Flüssigkeitsbehälters. Grundsätzlich ist es vorteilhaft, den Außendurchmesser des Schwappschutzrohres so zu wählen, dass der Spaltraum zwischen Behälterinnenwand und äußerer Rohrwandfläche möglichst gering ist, so dass bei einer Bewegung des Behälters keine nennenswerten dynamischen Bewegungen der Flüssigkeit in dem Spaltraum entstehen. Andererseits muss darauf geachtet werden, dass der Spaltraum groß genug ist, um ein Auftreten von Kapillareffekten zu verhindern. Das Auftreten von Kapillareffekten hängt bekanntermaßen auch von der Grenzflächenspannung ab, die zwischen einer Flüssigkeit und einer festen Oberfläche auftritt. Daher ist der optimale Abstand zwischen Behälterinnenwand und äußerer Rohrwandfläche auch davon abhängig, aus welchem Material Rohr und Behälter bestehen und welche Flüssigkeit, in dem Behälter aufbewahrt werden soll.

Vorzugsweise besteht der Flüssigkeitsbehälter aus Glas oder Kunststoff. Das Schwappschutzrohr besteht vorzugsweise aus Kunststoff oder Metall.

Wie bereits oben beschrieben, können der Flüssigkeitsbehälter und das Rohr einstückig ausgebildet sein. Alternativ kann das Rohr lösbar mit dem Flüssigkeitsbehälter verbunden sein. Dazu kann das Rohr beispielsweise auf der Innenseite eines Deckel für den Flüssigkeitsbehälter angebracht sein, so dass beim Anbringen des Deckels das Rohr in das Behälterinnere eingeführt wird. In einer anderen Ausführungsform kann auf dem Boden des Flüssigkeitsbehälters eine manschettenartige Erhebung oder Einbuchtung vorgesehen sein, in die oder über die das untere Endes des Rohres geführt wird, so dass ein Kraftschluss zwischen Behälter und Rohr entsteht.

In einer bevorzugten Ausführungsform ist ein kapazitiver Füllstandsensor an dem Flüssigkeitsbehälter angebracht. Besonders bevorzugte kapazitive Füllstandsensoren sind folienförmig ausgestaltet und auf der Außenseite des Flüssigkeitsbehälters aufgeklebt. Der kapazitive Füllstandsensor muss jedoch nicht am Flüssigkeitsbehälter angebracht sein, sondern kann auch in räumlicher Nähe zum Flüssigkeitsbehälter angeordnet sein.

Ein erfindungsgemäßer Flüssigkeitsbehälter hat vorzugsweise ein Fassungsvolumen von 0,1 bis 50 Litern, besonders bevorzugt von 0,2 bis 25 Litern, ganz besonders bevorzugt von 0,5 bis 15 Litern. Ein erfindungsgemäßer Flüssigkeitsbehälter kann ferner ein Fassungsvolumen von 1 Liter, 5 Litern, 10 Litern oder 20 Litern aufweisen.

Die Erfindung betrifft ferner ein automatisches Analysegerät mit einem Gerätegehäuse, das mindestens eine Kammer zur Aufnahme von Flüssigkeitsbehältern umfasst und wobei in der Kammer mindestens ein erfindungsgemäßer Flüssigkeitsbehälter mit einer Schwappschutzvorrichtung gelagert ist.

Die Kammer zur Aufnahme von Flüssigkeitsbehältern kann als Schublade ausgelegt sein, die horizontal aus dem Analysegerät herausziehbar ist. Alternativ kann die Kammer durch eine Anschlagtür verschließbar sein, wobei der Flüssigkeitsbehälter mit der Schwappschutzvorrichtung auf einem auf der Innenseite der Tür angebrachten Regalboden gelagert ist.

Ferner können in der Kammer des Analysegeräts Aufnahmepositionen für Flüssigkeitsbehälter vorgesehen sein, die mit einem in der Aufnahmeposition stationär angebrachten Füllstandsensor, vorzugsweise einem kapazitiven Füllstandsensor ausgestattet sind.

In einer Ausführungsform des erfindungsgemäßen Analysegeräts ist an einem in dem Gerät gelagerten erfindungsgemäßen Flüssigkeitsbehälter eine Vorrichtung zur Entnahme von Flüssigkeit angebracht. Vorzugsweise umfasst eine derartige Vorrichtung zur Entnahme von Flüssigkeit ein Saugrohr, das in das Rohr der Schwappschutzvorrichtung eingeführt ist.

Die Erfindung wird im Folgenden anhand einer Zeichnung erläutert.

### FIGURENBESCHREIBUNG

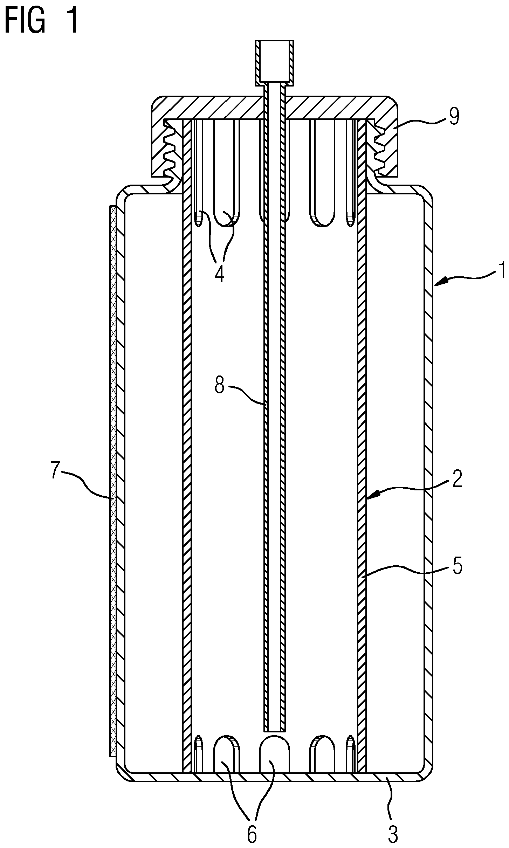

FIG. 1 zeigt einen Flüssigkeitsbehälter 1 mit einer Schwappschutzvorrichtung. Die Schwappschutzvorrichtung besteht aus einem Kunststoffrohr 2, das im Inneren des Flüssigkeitsbehälters 1 senkrecht zum Boden 3 des Flüssigkeitsbehälters 1 angeordnet ist. Sowohl der Flüssigkeitsbehälter 1 als auch das Schwappschutzrohr 2 haben eine kreisförmige Grundflächenform. Am oberen Ende des Rohres 2 sind mehrere Öffnungen 4 in der Rohrwand 5 vorgesehen, die einen Druckausgleich bewirken. Das untere Ende des Rohres 2 reicht bis zum Boden 3 des Flüssigkeitsbehälters 1. Am unteren Ende des Rohres 2 sind mehrere Öffnungen 6 in der Rohrwand 5 vorgesehen, die den Flüssigkeitsaustausch zwischen dem Innenraum des Schwappschutzrohres 2 und dem Spaltraum zwischen Behälterinnenwand und äußerer Rohrwandfläche gewährleisten. Das Rohr 2 hat denselben Durchmesser wie die Öffnung des Flüssigkeitsbehälters 1 und wird durch Kraftschluss im Bereich der Öffnung des Flüssigkeitsbehälters 1 fixiert. Die Öffnung des Flüssigkeitsbehälters 1 ist mit einem Schraubdeckel 9 verschlossen. Der Deckel 9 umfasst eine Öffnung, durch die ein Saugrohr 8 in das Behälterinnere geführt werden kann. Das Saugrohr 8 ist Teil einer nicht näher gezeigten Vorrichtung zur Entnahme von Flüssigkeit aus dem Flüssigkeitsbehälter 1. Das Saugrohr 8 reicht fast bis zum Boden 3 des Flüssigkeitsbehälters 1, um eine möglichst vollständige Entleerung des Behälters 1 zu ermöglichen. An dem Flüssigkeitsbehälter 1 ist eine kapazitive Sensorfolie 7 angebracht, die eine kontinuierliche und präzise Bestimmung des Füllstands einer Flüssigkeit in dem Behälter 1 ermöglicht.

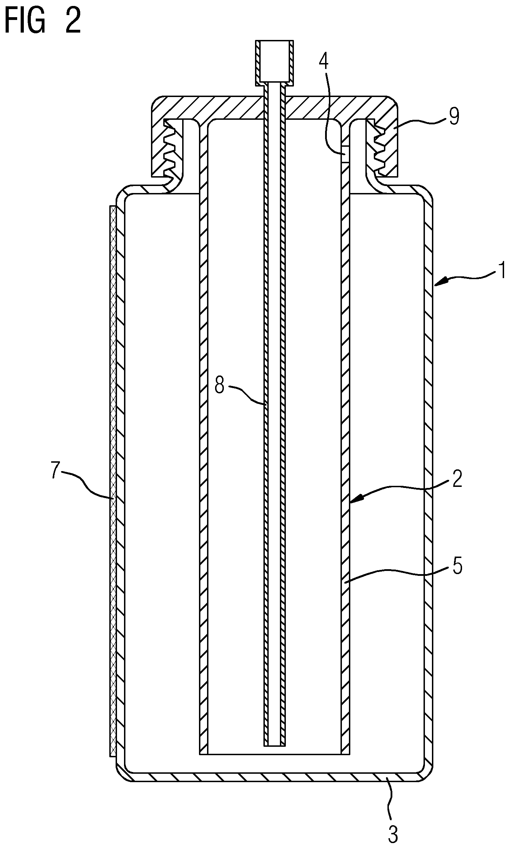

FIG. 2 zeigt einen etwas anderen Flüssigkeitsbehälter 1 mit einer Schwappschutzvorrichtung. In dieser Ausführungsform ist das Schwappschutzrohr 2 auf der Innenseite des Deckels 9 befestigt und wird also in den Behälter 1 eingeführt, indem der Deckel 9 angebracht wird. Am oberen Ende des Rohres 2 ist eine Öffnung 4 in der Rohrwand 5 vorgesehen, die einen Druckausgleich bewirkt. Das untere Ende des Rohres 2 berührt den Boden 3 des Flüssigkeitsbehälters 1 nicht, wodurch ein Flüssigkeitsaustausch zwischen dem Innenraum des Schwappschutzrohres 2 und dem Spaltraum zwischen Behälterinnenwand und äußerer Rohrwandfläche gewährleistet ist.

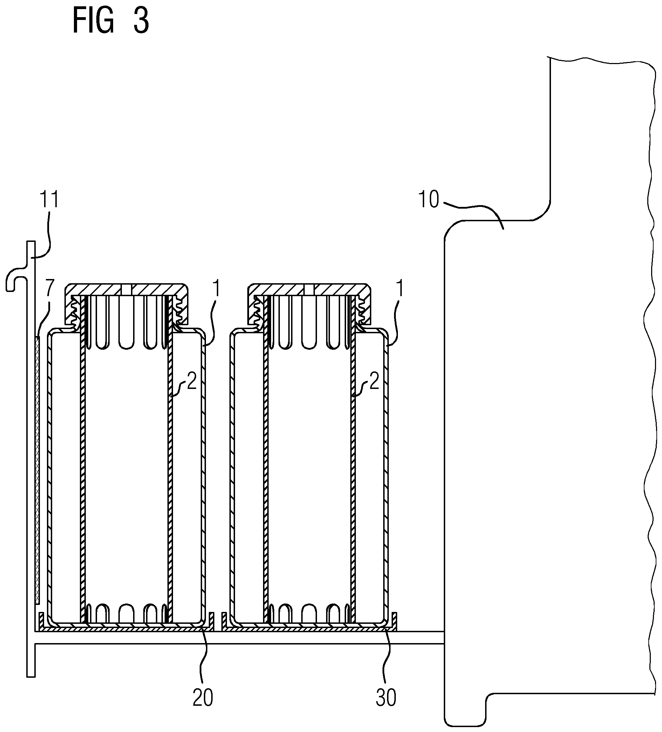

FIG. 3 zeigt eine Teilansicht eines Analysegeräts 10 mit einer horizontal aus dem Analysegerät 10 herausgezogenen Schublade 11. In der Schublade 11 befinden sich zwei Aufnahmepositionen 20, 30 für Flüssigkeitsbehälter 1 mit Schwappschutzrohren 2 wie beispielsweise in FIG. 1 dargestellt. Die Aufnahmeposition 20 ist mit einer stationären kapazitiven Sensorfolie 7 ausgestattet. Dazu ist die Sensorfolie 7 auf der Innenseite der Schubladentür angebracht, so dass in dieser Position auch Flüssigkeitsbehälter 1 angeordnet werden können, die selbst nicht mit einem Füllstandsensor ausgestattet sind. Für die Aufnahmeposition 30 kann ebenfalls eine stationäre kapazitive Sensorfolie 7 vorgesehen werden und zwar an der Rückwand in der Kammer des Analysegeräts 10, so dass bei geschlossener Schublade eine kontinuierliche Bestimmung des Füllstands in dem Flüssigkeitsbehälter 1 in Aufnahmeposition 30 durchgeführt werden kann.

### BEZUGSZEICHENLISTE

- 1: Flüssigkeitsbehälter
- 2: Schwappschutzrohr
- 3: Boden
- 4: Öffnung
- 5: Rohrwand
- 6: Öffnung
- 7: Sensorfolie
- 8: Saugrohr
- 9: Deckel
- 10: Analysegerät
- 11: Schublade
- 20: Aufnahmeposition
- 30: Aufnahmeposition

## Patentansprüche

1. Flüssigkeitsbehälter (1) mit einer Schwappschutzvorrichtung, **dadurch gekennzeichnet, dass** die Schwappschutzvorrichtung aus einem im Inneren des Flüssigkeitsbehälters (1) senkrecht zum Boden (3) des Flüssigkeitsbehälters (1) angeordneten Rohr (2) besteht, das dieselbe Grundflächenform aufweist wie der Flüssigkeitsbehälter (1) und wobei am oberen Ende des Rohres (2) mindestens eine Öffnung (4) in der Rohrwand (5) vorgesehen ist und wobei
a. entweder das untere Ende des Rohres (2) den Boden (3) des Flüssigkeitsbehälters (1) nicht berührt
b. oder am unteren Ende des Rohres (2) mindestens eine Öffnung (6) in der Rohrwand (5) vorgesehen ist
**dadurch gekennzeichnet, dass** der Außendurchmesser des Rohres (2) 50 % bis 90 % des Innendurchmessers des Flüssigkeitsbehälters (1) beträgt.

2. Flüssigkeitsbehälter (1) nach Anspruch 1, wobei der Flüssigkeitsbehälter (1) und das Rohr (2) jeweils eine kreisförmige Grundfläche aufweisen.

3. Flüssigkeitsbehälter (1) nach Anspruch 1, wobei der Flüssigkeitsbehälter (1) und das Rohr (2) jeweils eine mehreckige, vorzugsweise eine rechteckige Grundfläche aufweisen.

4. Flüssigkeitsbehälter (1) nach einem der vorhergehenden Ansprüche, wobei am oberen Ende und/oder am unteren Ende des Rohres (2) jeweils mehrere Öffnungen (4, 6) in der Rohrwand (5) vorgesehen sind.

5. Flüssigkeitsbehälter (1) nach Anspruch 4, wobei die mehreren Öffnungen (4) am oberen Ende des Rohres (2) und/oder die mehreren Öffnungen (6) am unteren Ende des Rohres (2) jeweils in einer einzigen Ebene angeordnet sind.

6. Flüssigkeitsbehälter (1) nach einem der vorhergehenden Ansprüche, wobei die Rohrwand (5) in dem Bereich zwischen dem oberen Ende und dem unteren Ende des Rohres (2) geschlossen ist.

7. Flüssigkeitsbehälter (1) nach einem der vorhergehenden Ansprüche, wobei der Flüssigkeitsbehälter (1) und das Rohr (2) einstückig ausgebildet sind.

8. Flüssigkeitsbehälter (1) nach einem der Ansprüche 1 bis 4, wobei das Rohr (2) lösbar mit dem Flüssigkeitsbehälter (1) verbunden ist.

9. Flüssigkeitsbehälter (1) nach einem der vorhergehenden Ansprüche, an dem ein kapazitiver Füllstandsensor (7) angebracht ist.

10. Flüssigkeitsbehälter (1) nach einem der vorhergehenden Ansprüche mit einem Fassungsvolumen von 0,1 bis 50 Litern.

11. Automatisches Analysegerät (10) mit einem Gerätegehäuse mit mindestens einer Kammer zur Aufnahme von Flüssigkeitsbehältern, **dadurch gekennzeichnet, dass** in der Kammer mindestens ein Flüssigkeitsbehälter (1) mit einer Schwappschutzvorrichtung gemäß einem der vorhergehenden Ansprüche gelagert ist.

12. Automatisches Analysegerät (10) gemäß Anspruch 11, wobei die Kammer als Schublade (11) ausgelegt ist, die horizontal aus dem Analysegerät (10) herausziehbar ist.

13. Automatisches Analysegerät (10) gemäß Anspruch 11, wobei die Kammer durch eine Anschlagtür verschließbar ist und wobei der Flüssigkeitsbehälter (1) mit der Schwappschutzvorrichtung auf einem auf der Innenseite der Tür angebrachten Regalboden gelagert ist.

14. Automatisches Analysegerät (10) gemäß einem der Ansprüche 11 bis 13, wobei eine Vorrichtung zur Entnahme von Flüssigkeit an dem Flüssigkeitsbehälter (1) mit der Schwappschutzvorrichtung angebracht ist.

15. Automatisches Analysegerät (10) gemäß Anspruch 14 wobei die Vorrichtung zur Entnahme von Flüssigkeit mindestens ein Saugrohr (8) umfasst, das in das Rohr (2) der Schwappschutzvorrichtung eingeführt ist.

## Claims

1. Liquid container (1) with a splash prevention device, **characterized in that** the splash prevention device is composed of a pipe (2) which is arranged in the interior of the liquid container (1), perpendicular to the bottom (3) of the liquid container (1), and which has the same base area shape as the liquid container (1), wherein at least one opening (4) is provided in the pipe wall (5) at the upper end of the pipe (2), and wherein
a. either the lower end of the pipe (2) does not touch the bottom (3) of the liquid container (1)
b. or at least one opening (6) is provided in the pipe wall (5) at the lower end of the pipe (2),
**characterized in that** the external diameter of the pipe (2) is 50% to 90% of the internal diameter of the liquid container (1).

2. Liquid container (1) according to Claim 1, wherein the liquid container (1) and the pipe (2) each have a circular base area.

3. Liquid container (1) according to Claim 1, wherein the liquid container (1) and the pipe (2) each have a polygonal base area, preferably a rectangular base area.

4. Liquid container (1) according to one of the preceding claims, wherein several openings (4, 6) are provided in the pipe wall (5) at the upper end and/or at the lower end of the pipe (2).

5. Liquid container (1) according to Claim 4, wherein the several openings (4) at the upper end of the pipe (2) and/or the several openings (6) at the lower end of the pipe (2) are each arranged in a single plane.

6. Liquid container (1) according to one of the preceding claims, wherein the pipe wall (5) is closed in the region between the upper end and the lower end of the pipe (2).

7. Liquid container (1) according to one of the preceding claims, wherein the liquid container (1) and the pipe (2) are formed in one piece.

8. Liquid container (1) according to one of Claims 1 to 4, wherein the pipe (2) is connected to the liquid container (1) in a releasable manner.

9. Liquid container (1) according to one of the preceding claims, with a capacitive filling-level sensor (7) mounted thereon.

10. Liquid container (1) according to one of the preceding claims, having a holding volume of 0.1 to 50 litres.

11. Automatic analysis appliance (10) having an appliance housing with at least one chamber for receiving liquid containers, **characterized in that** at least one liquid container (1) with a splash prevention device according to one of the preceding claims is stored in the chamber.

12. Automatic analysis appliance (10) according to Claim 11, wherein the chamber is designed as a drawer (11) which can be pulled horizontally out of the analysis appliance (10).

13. Automatic analysis appliance (10) according to Claim 11, wherein the chamber is closable by a swing door, and wherein the liquid container (1) with the splash prevention device is placed on a shelf floor mounted on the inner face of the door.

14. Automatic analysis appliance (10) according to one of Claims 11 to 13, wherein a device for removal of liquid is mounted on the liquid container (1) with the splash prevention device.

15. Automatic analysis appliance (10) according to Claim 14, wherein the device for removal of liquid comprises at least one suction pipe (8) which is inserted into the pipe (2) of the splash prevention device.

## Revendications

1. Récipient (1) à liquide, comprenant
un dispositif anti-éclaboussures, **caractérisé en ce que** le dispositif anti-éclaboussures est constitué d'un tube (2), qui est disposé à l'intérieur du récipient (1) à liquide, perpendiculairement au fond (3) du récipient (1) à liquide, et qui a la même forme de surface de fond que le récipient (1) à liquide et dans lequel il est prévu, à l'extrémité supérieure du tube (2), au moins une ouverture (4) dans la paroi (5) du tube et dans lequel
a. ou bien l'extrémité intérieure du tube (2) ne touche pas le fond (3) de récipient (1) à liquide
b. ou bien il est prévu, à l'extrémité inférieure du tube (2), au moins une ouverture (6) dans la paroi (5) du tube
**caractérisé en ce que** le diamètre extérieur du tube (2) représente de 50 % à 90 % du diamètre intérieur du récipient (1) à liquide.

2. Récipient (1) à liquide suivant la revendication 1, dans lequel le récipient (1) à liquide et le tube (2) ont chacun une surface de base circulaire.

3. Récipient (1) à liquide suivant la revendication 1, dans lequel le récipient (1) à liquide et le tube (2) ont chacun une surface de base polygonale, de préférence rectangulaire.

4. Récipient (1) à liquide suivant l'une des revendications précédentes, dans lequel il est prévu, à l'extrémité supérieure et/ou à l'extrémité inférieure du tube (2), respectivement plusieurs ouvertures (4, 6) dans la paroi (5) du tube.

5. Récipient (1) à liquide suivant la revendication 4, dans lequel les plusieurs ouvertures (4), à l'extrémité supérieure du tube (2), et/ou les plusieurs ouvertures (6), à l'extrémité inférieure du tube (2), sont disposées respectivement dans un plan unique.

6. Récipient (1) à liquide suivant l'une des revendications précédentes, dans lequel la paroi (5) du tube est fermée dans la partie comprise entre l'extrémité supérieure et l'extrémité inférieure du tube (2).

7. Récipient (1) à liquide suivant l'une des revendications précédentes, dans lequel le récipient (1) à liquide et le tube (2) sont constitués d'une seule pièce.

8. Récipient (1) à liquide suivant l'une des revendications 1 à 4, dans lequel le tube (2) est relié de manière amovible au récipient (1) à liquide.

9. Récipient (1) à liquide suivant l'une des revendications précédentes, sur lequel est mis un capteur (7) capacitif de niveau.

10. Récipient (1) à liquide suivant l'une des revendications précédentes, ayant un volume de contenance de 0,1 à 50 litres.

11. Appareil (10) d'analyse automatique, comprenant un boîtier d'appareil ayant au moins une chambre de réception de récipient à liquide, **caractérisé en ce que**, dans la chambre, est mis au moins un récipient (1) à liquide ayant un dispositif anti-éclaboussures suivant l'une des revendications précédentes.

12. Appareil (10) d'analyse automatique suivant la revendication 11, dans lequel la chambre est conçue sous la forme d'un tiroir (11), qui peut être retiré horizontalement de l'appareil (10) d'analyse.

13. Appareil (10) d'analyse automatique suivant la revendication 11, dans laquelle la chambre peut être fermée par une porte d'arrêt et dans lequel le récipient (1) à liquide, ayant le dispositif anti-éclaboussures, est mis sur une plateau de rayonnage mis sur la face intérieure de la porte.

14. Appareil (10) d'analyse automatique suivant l'une des revendications 1 à 13, dans lequel un système de prélèvement de liquide est mis sur le récipient (1) à liquide ayant le dispositif anti-éclaboussures.

15. Appareil (10) d'analyse automatique suivant la revendication 14, dans lequel le système de prélèvement de liquide comprend au moins un tube (8) d'aspiration, qui pénètre dans le tube (2) du dispositif anti-éclaboussures.
